# EUROPEAN PATENT SPECIFICATION

(11) **EP 0 816 714 B1**
(45) Date of publication and mention of the grant of the patent: **11.09.2002**
(21) Application number: 97109901.5
(22) Date of filing: 18.06.1997
(51) Int. Cl.: F16H 1/22, F16H 37/06, B65B 65/02

(54) **Drive assembly, in particular for automatic manufacturing machines**
Antriebsanordnung, insbesondere für automatische Herstellungsmaschinen
Ensemble d'entraînement, en particulier pour machines automatiques de fabrication

(30) Priority: 05.07.1996 IT SV960021
(43) Date of publication of application: 07.01.1998
(73) Proprietor: SASIB S.p.A., 40128 Bologna (IT)
(72) Inventor: Spada, Valter, 40043 Marzabotto (BO) (IT)
(74) Representative: Karaghiosoff, Giorgio Alessandro, Dott.

(56) References cited:
- CH-A- 623 640
- DE-A- 1 550 865
- DE-A- 2 548 614
- DE-A- 3 615 442
- DE-A- 4 025 592
- DE-C- 714 243
- FR-A- 2 239 383

## Description

The invention relates to a drive unit, in particular in automatic manufacturing machines and in a special manner in manufacturing machines provided with a plurality of operative units which perform complex processes in a manner synchronized between them, and the said drive unit comprising at least one main drive motor which drives a certain number of said operative units arranged at different distances from the main motor thanks to transmission shafts driven by means of several kinematic drive chains which extend along the machine passing in correspondence of the operative units, branch out from the shaft of the main motor with a geometry in form of a star and are provided with corresponding output shafts, a part of the operative units being directly connected to the corresponding output shafts of the drive unit, while a part of the operative units is connected to the drive unit thanks to a further branching of the kinematic chains of the drive unit, which branching traverses the operative units connected directly to the drive unit, according to the pre-characterizing part of claim 1.

A drive unit of this kind is known from the document FR-A-2 239 383 which discloses several kinematic chains extending from the output shafts of the driving motor to the last associated operative unit without being interrupted by couplings.The document CH-A-623 640 discloses couplings featuring at least one degree of freedom in the transversal sense.

The invention aims to provide a drive unit of the kind described above, which allows a shorter length and a minor thermal expansion of the kinematc drive chains with a global displacement effect of minor entity and which can be more easily compensated by the tollerance.

The drive unit according to the invention is characterized by the combination of the following features:
a) between the output shafts of the kinematic drive chains of the drive unit and the input shafts of the operative units directly connected to the drive unit, there are provided couplings which are realized such as to have at least one degree of freedom in the transversal sense with regard to the axis of said shafts and at least one further degree of freedom in the axial sense of said shafts,
b) each coupling has two parts and one first part of the coupling, keyed on the input shaft of an operative unit, is provided with a radial peripheral coupling cavity open at least on the frontal side turned towards the other part of the coupling which is mounted revolving with the corresponding output shaft of the drive unit and has an axial frontal coupling projection coinciding with said coupling cavity and engaged in this cavity without clearance in a circumferential sense, but sliding radially and axially in a predetermined measure, the coupling cavity and the coupling projection being arranged in an eccentric position relative to the axis of rotation of the shaft,
c) the two parts of the coupling are provided with counterweight and/or balancing means which are constituted by a balancing cavity made in the part of the coupling in a position diametrically opposite to the coupling cavity, and by an axial frontal balancing projection carried by the other part of the coupling in a position diametrically opposed to the coupling projection and engaged in the balancing cavity with a certain clearance in the radial sense as well in the tangential sense.

The dimensionig of the radial cavities of the first part of the coupling can be such, whereby, within the range of the preset tollerances for at least only one of the cavities, the radial depth is larger than the radial extension of the radial projections of the second part of the couplings, which are in normal conditions positioned substantially central relative to the radial extensions of one or more of the said cavities. Consequently the roller can effect in the corresponding cavity both a radial slide, even if limited, as well as a limited axial slide. Furthermore, the couplings allow for a slight angular displacement of the shafts coupled between them.

These devices further consent to limit the stress or load effects on the sup-ports of the drive units, in this case of the shafts, and of the associated couplings, limiting the losses to friction and reducing the total stress and consequently increasing the duration of the mechanical parts. The kinematic repercussions of the displacements are of very slight entity also thanks to shortening of the extensions of the kinematic drive chains and the possible displacements of synchronisaton,due to the even if small degree of freedom of the couplings, can easily be compensated by adjustment of the same at intervals of time or when necessary.

Furthermore, in the manufacturing machine with modular type construction, the devices according to the invention allow to obtain advantages also from the point of view of criticallity of assembly and of the relative positioning of the operative units between themselves and with regards to the drive unit.

In particular the invention foresees the application of the aforementioned devices in combination or singularly on the machines for the manufacture of articles of the tobacco industry, as packing machines, wrapping machines or other types of machines.

The invention relates to further perfectings which are the object of the claims below.

The characteristics of the invention and the advantages derived from the same are better evidenced from the following description of a nonlimiting executive example illustrated in the attached drawings, where:

The fig. 1 shows a plan view from above of a manufacturing machine with modular construction equipped with a drive unit according to the invention.

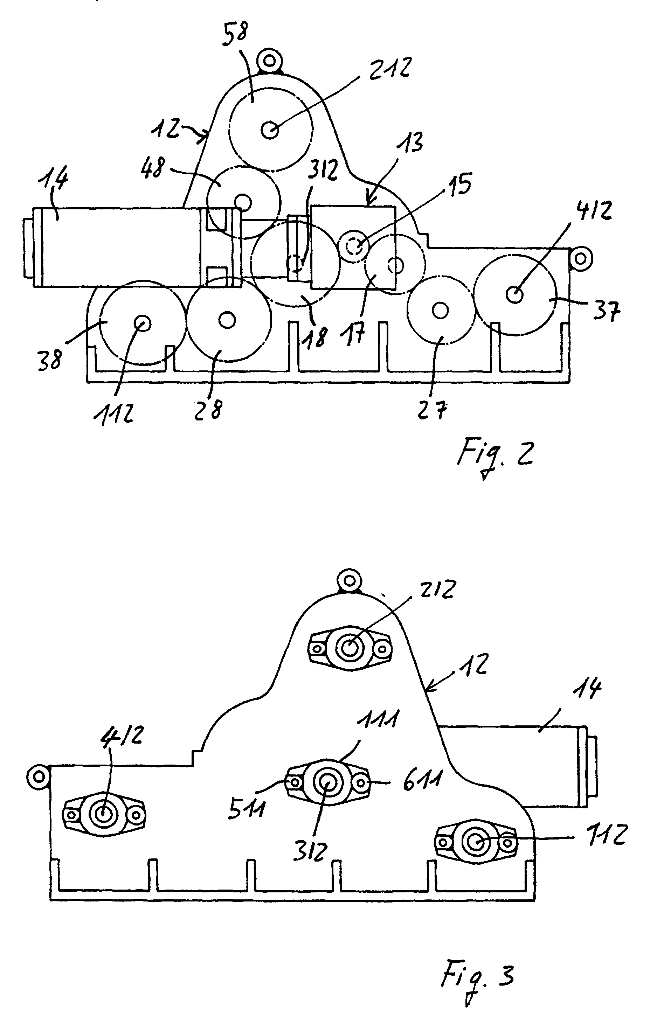

The fig. 2 shows a view of the rear side of the drive unit according to fig. 1, with the kinematic chains shown schematically.

The fig. 3 shows a view of the front of the drive unit according to the pre-ceding figures, whith the output shafts of the kinematic chains provided with coupling joints according to the invention.

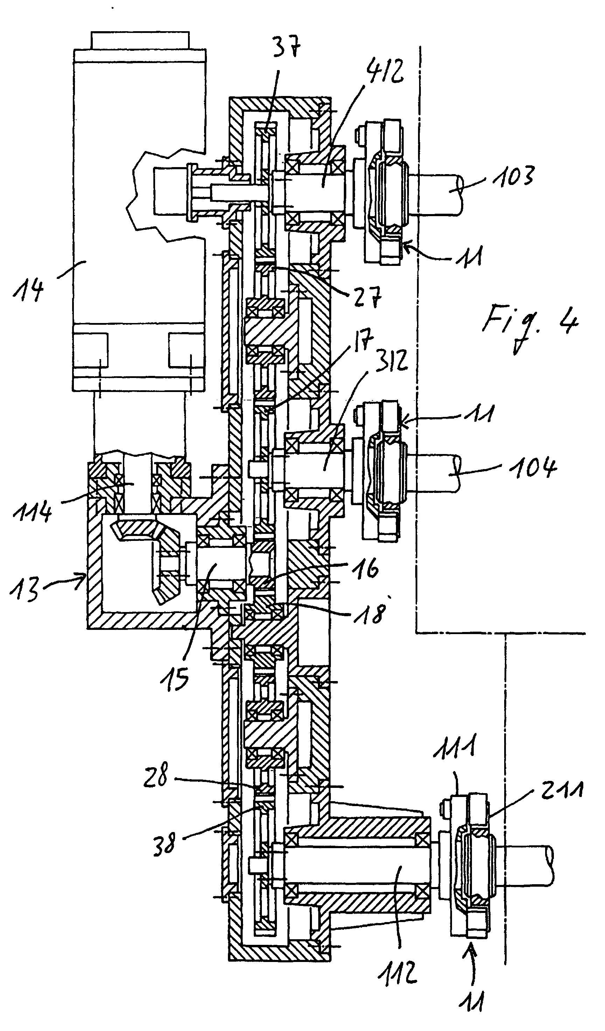

The fig. 4 shows a view in cross-section according to a horizontal plane of the drive unit according to the preceding figures.

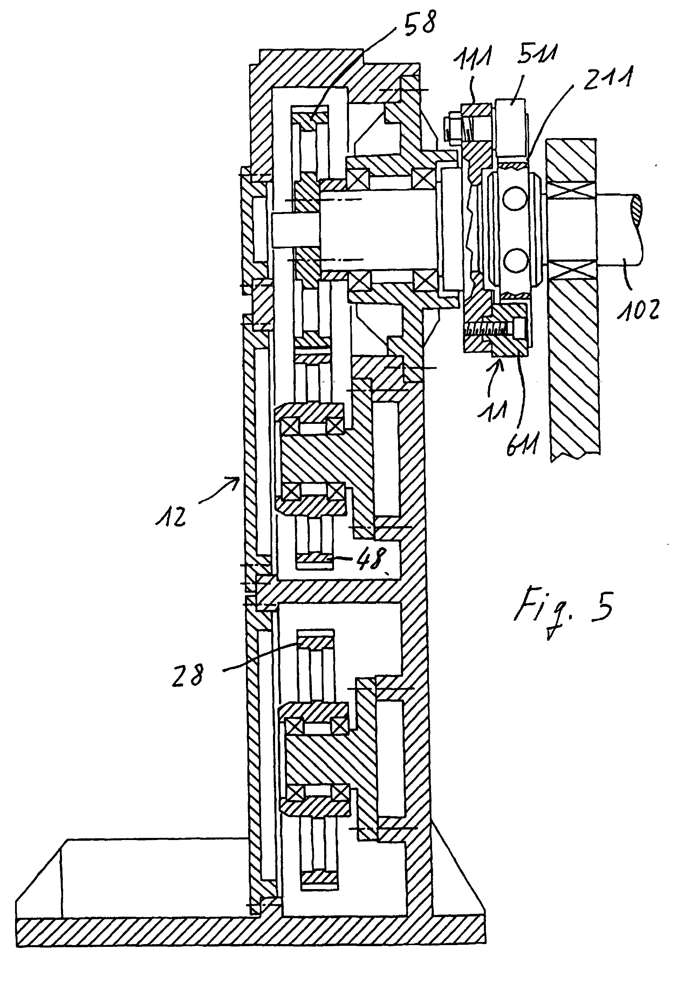

The fig. 5 shows a cross-section according to a median vertical plane and parallel with the axis of the output shafts of the drive unit according to the preceding figures.

The fig.s 6 and 7 show an axial frontal view and a radial view rispectively of one of the two parts of the coupling joint between the output shafts of the drive unit and the input shafts of the operative units.

The fig.s 8 and 10 show various views of the other part of the coupling associated to the one according to the fig.s 6 and 7, showing the engaging projections of the latter.

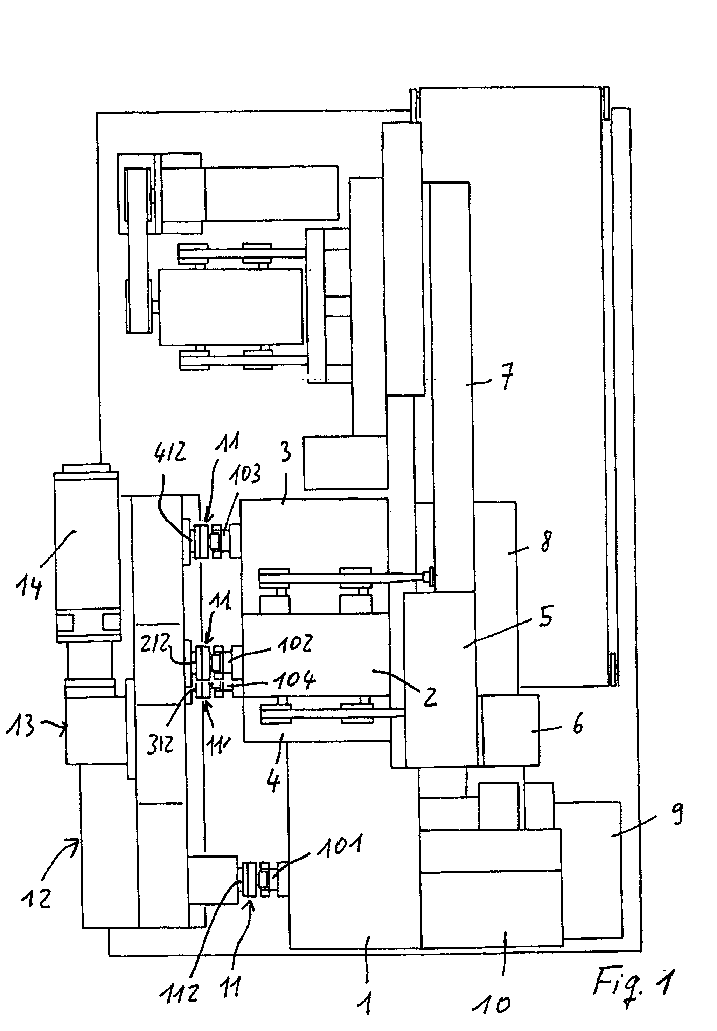

With reference to the figures, a manufacturing machine, for example a machine for packing cigarettes, or similar, comprises a plurality of operative units shown in figure 1 and only some are indicated with the numbers 1, 2, 3, 4, 5, 6, 7, 8, 9, 10 and which are assigned to carry out certain operations in a synchronized manner among themselves.

Some operative units 1, 2, 3 are arranged in different points of the machine and each having an input shaft 101, 102, 103, 104 which is connected by means of a coupling 11 to an output shaft 112, 212 ,213, 412 of a motorized drive unit 12.

The drive unit 12 has at least one motor 14 which is connected by means of a kinematic drive chain substantially separate for each output shaft 112, 212, 312, 412.

This is evidenced from fig.s 2 and 5.

The motor 14 is dynamically connected with its shaft 114 at an angle by means of a transmission 13 consisting of a set of bevel gears to an input shaft 15 of the drive unit 12. The input shaft 15 drives a transmission unit, namely a main drive pinion 16, from which substantially depart all the kinematic chains that lead to the output shafts 112, 212, 312, 412. These are shown schema-tically with their component gears 17, 27, 37; 18, 28, 38, and 18, 48, 58. As clearly evident from fig.s 2 and 3, the main transmission unit 16 of the kinematic chains 17, 27, 37; 18, 28, 38; 18, 48, 58 is in the lower central position relative to the distribution of the output shafts 112, 212, 312, 412, namely of the driven operative units 1, 2, 3, 4, while the kinematic chains extend themselves along substantially radial directrices relative to said main transmission unit 16, with a configuration in form of a star.

In the fig.s 4 and 5, the kinematic drive chains shown with their rispective gear trains 17, 27, 37; 18, 28, 38; 18, 48, 58, are shown with greater constructive details.

Therefore, each kinematic chain has a relatively short extension and is formed by a limited number of transmission units, so that the heating and the corresponding thermal expansion of the transmission units and of all the groups and of the operative units of the machine have a lesser effect on the displacements of relative position, the global value of which can easily be contained by the limits imposed by the possible tollerances.

With reference to fig. 1, the operative units 1, 2, 3, 4, 5, 6, 7, 8, 9, 10 and the others that are not specifically shown for simplicity, this not being relevant for the purpose of understanding the invention, are not all connected directly to the drive unit 12, but are provided with branches of the kinematic transmission chains also in the operative units 1, 2, 3, 4 directly connected to the drive unit and which cross said operative units having output devices from said operative units 1, 2, 3, 4 which can be connected by means of couplings to the input devices of the remaining operative units 5, 6, 7, 8, 10 not directly connected to the drive unit 12. Also in this case it is preferable, apart from from connecting together operative units which perform functions in tight synchronicity also to associate with regards to the transmission of the drive motion of the operative units 1, 2, 3, 4, the operative units 5, 6, 7, 8, 9, 10 according to a scheme and a configuraton of the secondary kinematic chains branching similar to the ones of the drive unit 12 relative to the operative units 1, 2, 3, 4.

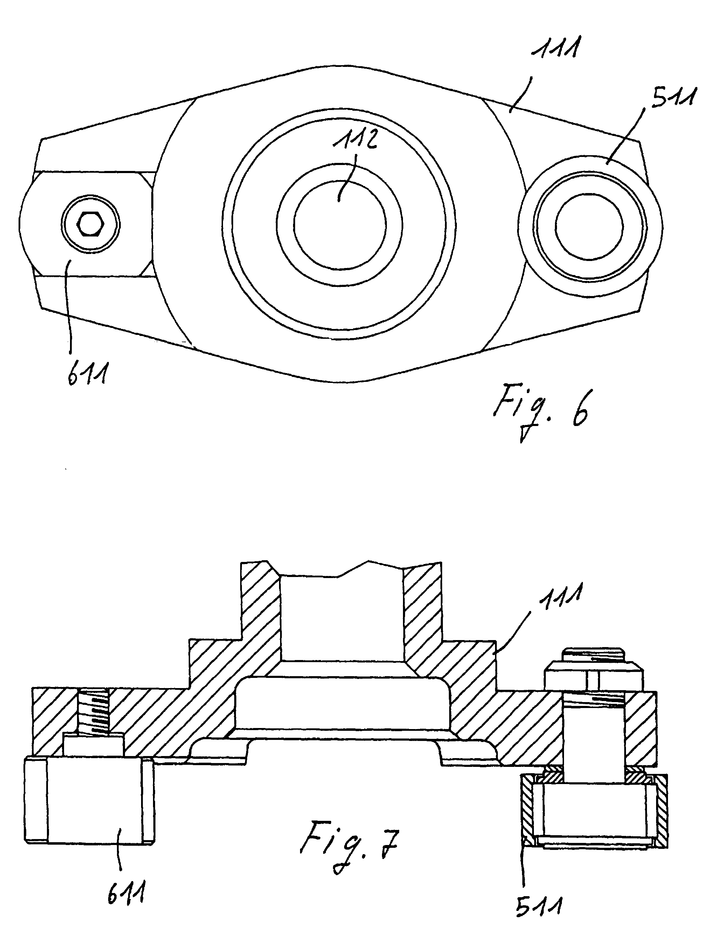

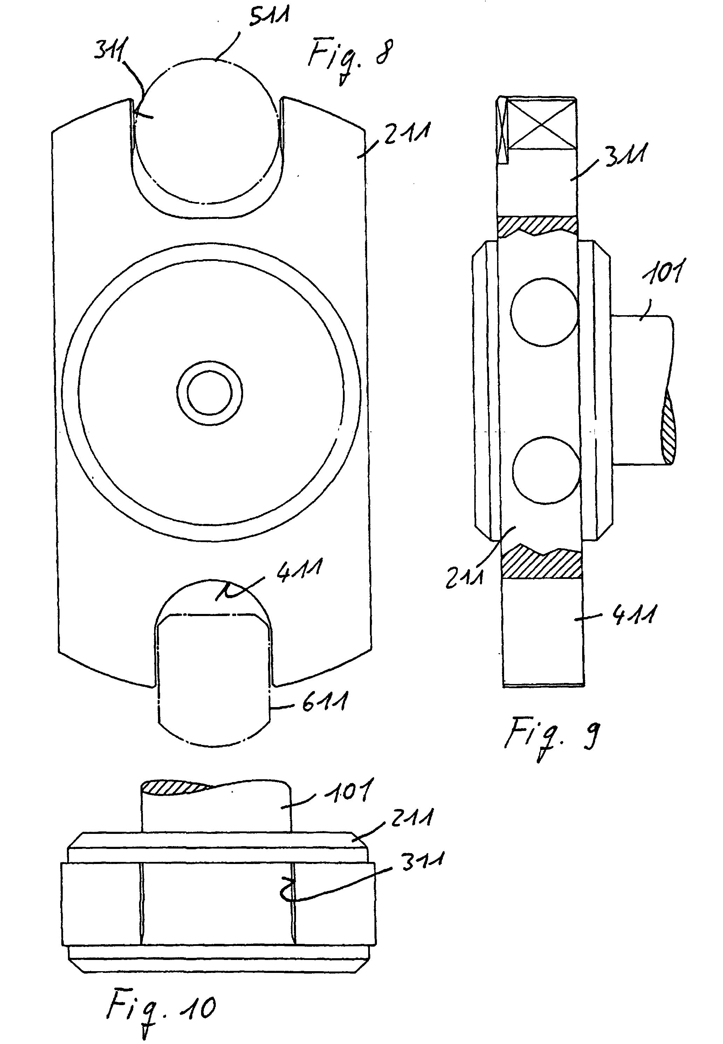

With reference to the fig.s 3 to 10 and with particular reference to the figures 6 to 10, the output shafts 112, 212, 312, 412 of the drive unit 12 are connected to the input shafts 101, 102, 103, 104, of the operative units 1, 2, 3, 4, thanks to coupling joints 11 which have three degrees of freedom within the range of the preestablished tollerances, namely one degree of freedom in the axial sense of the shaft, one degree of freedom in the radial direction and one degree of freedom relative to the phase between the two shafts joint by the coupling. The tollerances allowed are such not to influence the correct operation of the machine, but to allow a compensation of the transversal displacements between the output shafts 112, 212, 312, 412 and the input ones 101. 103, 103, 104 due to the, even if limited, effect of thermal expansion.

With reference to the example illustrated, the couplings 11 present a couple of plates 111, 211 which are mounted integral revolving on the shafts 112, 212, 312, 412 and 101, 102, 103, 104, with the barycenter arranged coaxially with the axis of said shafts.

The plates 111 associated with the input shafts 101, 102, 103, 104 of the operative units 1, 2, 3, 4, have peripheral radial cavities or grooves 311, 411 which are arranged diametrically opposed and which are open on the radially external side as well as frontal side facing the associated plate 211. The plates 211 associated to the output shafts 112, 212, 312, 412 of the drive unit 12 have in a position substantially coinciding with the two diametrically opposed grooves 311, 411 of the plates 111 two frontal projections 511, 611 which are assigned to penetrate into the corresponding cavities. An axial, frontal projection is consti-tuted by a drive roller 511 which engages in the corresponding groove in a radi-ally and axially sliding manner. Another frontal roller 611 forms a counterweight to the roller 511 which is revolving around an axis parallel to the axis of the shafts. In assembled condition of the coupling, said counterweight penetrates into the corresponding cavity in a loose manner, the same being larger than the counterweight.

The grooves 311 and 411 have in the radial sense a certain length which allows said projections to slide relative to the same within the range of the pre-established tollerances. The same beeing arranged in normal conditions in a median position relative to the radial extension of the grooves.

The roller 511 engages substantially without play or with minimum play in a sense tangential to the rotation of the coupling. The whole is made in such a manner, whereby the distribution of the masses on the plates 111 and 211 results symmetrical relative to the central transversal axis coinciding with the axis of rotation.

Thanks to the devices mentioned above, the output shafts 112, 212, 312, 412 of the drive unit and the shafts 101, 102, 103, 104 of the operative units 1, 2, 3, 4 can effect slight reciprocal displacements transversal as well as radial, as well as relative to an angular displacement of the same. This possibility contri-butes to reducing the possible loads on the shaft supports in case of displacements of position due to thermal expansion.

This device allows also to release the loads and the effects of thermal expansion on the branching secondary kinematic chains of the operative units 1, 2, 3, 4 directly connected to the drive unit 12 to drive the operative units 5, 6, 7, 8, 9, 10 which take their drive motion from these operative units 1, 2, 3, 4.

The devices of the present invention results noticeably advantageous in the case of complex manufacturing machines whith a modular construction, whereby one achieves noticeable simplifications in the assembly operations, as it is possible to operate with tollerances of reciprocal positioning of the drive unit 12 and the operative units 1 to 10 relative to the same and between themselves.

Naturally the invention is not limited to the executive forms described and illustrated, but can be amply changed above all constructional, the whole without abandoning the informatory principle explained above and claimed in the following.

## Claims

1. Drive unit, in particular in automatic manufacturing machines and in a special manner in manufacturing machines provided with a plurality of operative units (1, 2, 3, 4, 5, 6, 7, 8, 9, 10) which perform complex processes in a manner synchronized between them, and the said drive unit comprising at least one main drive motor (14) which drives a certain number of said operative units (1, 2, 3, 4, 5, 6, 7, 8, 9, 10) arranged at different distances from the main motor (14) thanks to transmission shafts (112, 212, 312, 412; 101, 102, 103, 104) driven by means of several kinematic drive chains (17, 27, 37; 18, 28, 38; 18, 48, 58) which extend along the machine passing in correspondence of the operative units (1, 2, 3, 4), branch out from the shaft of the main motor (14) with a geometry in form of a star and are provided with corresponding output shafts (112, 212, 312, 412), a part of the operative units (1, 2, 3, 4) being directly connected (101, 102, 103, 104, 11) to the corresponding output shafts of the drive unit, while a part of the operative units (5, 6, 7, 8, 9, 10) is connected to the drive unit thanks to a further branching of the kinematic chains of the drive unit, which branching traverses the operative units (1, 2, 3, 4) connected directly to the drive unit (12),
**characterized by** the combination of the following features:
a) between the output shafts (112, 212, 312, 412) of the kinematic drive chains (17, 28, 38; 18, 28, 38; 18, 48, 58) of the drive unit (12) and the input shafts (101, 102, 103, 104) of the operative units (1, 2, 3, 4) directly connected to the drive unit, there are provided couplings (11) which are realized such as to have at least one degree of freedom in the transversal sense with regard to the axis of said shafts and at least one further degree of freedom in the axial sense of said shafts,
b) each coupling (11) has two parts (111, 211) and one first part (211) of the coupling, keyed on the input shaft (101, 102, 103, 104) of an operative unit (1, 2, 3, 4), is provided with a radial peripheral coupling cavity (311) open at least on the frontal side turned towards the other part (111) of the coupling which is mounted revolving with the corresponding output shaft (112, 212, 312, 412) of the drive unit (12) and has an axial coupling projection (511) coinciding with said coupling cavity (311) and engaged in this cavity without clearance in a circumferential sense, but sliding radially and axially in a predetermined measure, the coupling cavity (311) and the coupling projection (511) being arranged in an eccentric position relative to the axis of rotation of the shaft,
c) the two parts (111, 211) of the coupling are provided with counterweight and/or balancing means (611, 411) which are constituted by a balancing cavity (411) made in the first part (111) of the coupling in a position diametrically opposite to the coupling cavity (311), and by a frontal balancing projection (611) carried by the other part (211) of the coupling in a position diametrically opposed to the coupling projection (511) and engaged in the balancing cavity (411) with a certain clearance in the radial sense as well in the tangential sense.

2. Drive unit according to claim 1, **characterized in that** the frontal coupling projection (511) is constituted by a roller revolving around an eccentric shaft and parallel to the axis of the corresponding shaft, while the frontal balancing projection (611) is stationary.

3. Drive unit according to claim 1 or 2, **characterized in that** the two parts (111, 211) of the coupling have two radially opposed wings, on which the frontal axial coupling and balancing projections (511, 611) and the coupling and balancing cavities (311, 411) are provided.

4. Drive unit according to one or more of the preceding claims, **characterized in that** at least one of the coupling and balancing cavities (311, 411) is open on both frontal sides and on the radial external side.

## Patentansprüche

1. Antriebseinheit, insbesondere für automatische Produktionsmaschinen und im speziellen für Produktionsmaschinen, die mehrere Funktionseinheiten (1,2, 3,4,5,6,7,8,9,10) aufweisen, die komplexe Prozesse synchronisiert durchführen, wobei die Antriebseinheit mindestens einen Hauptantriebsmotor (14) hat, der eine bestimmte Zahl von in verschiedenen Entfernungen vom Hauptmotor (14) angebrachte Funktionseinheiten (1,2,3,4,5,6,7,8,9,10) mittels durch verschiedene kinematische Antriebsketten (17,27,37;18,28,38;18,48,58), die längs der Maschine, korrespondierend mit den Funktionseinheiten (1,2,3,4), verlaufen, die von der Welle des Hauptantriebmotors (14) in einer Sterngeometrie abzweigen und die entsprechende Ausgangswellen (112,212,312,412) aufweisen, angetriebener Transmissionswellen (112,212,312,412;101,102,103,104) antreibt, wobei ein Teil der Funktionseinheiten (1,2,3,4) in direkter Verbindung (101,102,103,104,11) mit den entsprechenden Ausgangswellen der Antriebseinheit stehen, während ein anderer Teil der Funktionseinheiten (5,6,7,8,9,10) mittels einer weiteren Verzweigung der kinematischen Ketten der Antriebseinheit verbunden ist, die sich über die Funktionseinheiten (1,2,3,4), die direkt mit der Antriebseinheit (12) verbunden sind, erstreckt,
**gekennzeichnet dadurch, dass**
a) zwischen den Ausgangswellen (112,212,312,412) der kinematischen Antriebsketten (17,28,38;18,28,38;18,48,58) der Antriebseinheit (12) und den Eingangswellen (101,102,103,104) der Funktionseinheiten (1,2,3,4), die direkt mit der Antriebseinheit verbunden sind, Kupplungen (11) vorhanden sind, die so ausgebildet sind, dass sie mindestens einen Freiheitsgrad in einer Transversalrichtung bezüglich der Achse der Wellen und mindestens einen weiteren Freiheitsgrad in axialer Richtung der Wellen haben,
b) jede Kupplung (11) zwei Teile (111,211) aufweist und ein erster Teil (211) der Kupplung, verkeilt mit der Eingangswelle (101,102,103,104) einer Funktionseinheit (1,2,3,4), mit einer in Radialrichtung umfangseitig gelegenen Kupplungsausnehmung (311) versehen ist, die wenigstens auf der frontalen, zum anderen Teil (111) der Kupplung gerichteten Seite offen ist, das mit der korrespondierenden Ausgangswelle (112,212,312,412) der Antriebseinheit (12) rotiert und eine axialen Kupplungsklaue (511) hat, der mit der Kupplungsausnehmung (311) übereinstimmt und die in Umfangsrichtung ohne Spielraum, jedoch radial und axial in einem vorher bestimmten Ausmaß gleitend, in diese Ausnehmung eingreift, und wobei die Kupplungsausnehmung (311) und die Kupplungsklaue (511) in einer exzentrischen Position relativ zur Rotationsachse der Welle angeordnet sind,
c) die beiden Teile (111,211) der Kupplung mit Gegengewichten und/oder Ausgleichsmitteln (611,411) versehen sind, die durch eine im ersten Teil (111) der Kupplung, diametral gegenüberliegend zur Kupplungsausnehmung (311) positioniert, ausgebildeten Ausgleichsausnehmung (411) und eine frontale Ausgleichsklaue (611), die am anderen Teil (211) der Kupplung, diametral gegenüberliegend zur Kupplungsklaue (511) positioniert und mit einem gewissen Spielraum sowohl in Radialrichtung als auch in Tangentialrichtung in die Ausgleichsausnehmung (411) eingreifend, sitzt, gebildet werden.

2. Antriebseinheit nach Anspruch 1,
**gekennzeichnet dadurch, dass**
die frontale Kupplungsklaue (511) durch eine um eine exzentrische Welle und parallel zur Achse der betreffenden Welle rotierende Laufrolle gebildet ist, während die frontale Ausgleichsklaue (611) stationär ist.

3. Antriebseinheit nach Anspruch 1 oder 2,
**gekennzeichnet dadurch, dass**
die beiden Teile (111,211) der Kupplung zwei radial gegenüberliegende Flügel aufweisen, auf denen sich die frontalen axialen Kupplungsklauen (511,611) und die Kupplungs- und die Ausgleichsausnehmung (311,411) befinden.

4. Antriebseinheit nach einem oder mehrerer der vorangehenden Ansprüche
**gekennzeichnet dadurch, dass**
mindestens eine der Kupplungs- und Ausgleichsausnehmungen (311,411) sowohl auf der frontalen Seite als auch auf der radial externen Seite offen sind.

## Revendications

1. Unité d'entraînement, en particulier dans des machines automatiques à manufacturer et d'une manière spéciale dans des machines à manufacturer pourvues de plusieurs unités opérationnelles (1, 2, 3, 4, 5, 6, 7, 8, 9, 10) qui exécutent des processus complexes d'une manière synchronisée entre eux, et ladite unité d'entraînement comprenant au moins un moteur d'entraînement principal (14) qui entraîne un certain nombre desdites unités opérationnelles (1, 2, 3, 4, 5, 6, 7, 8, 9, 10) disposées à différentes distances du moteur principal (14) grâce à des arbres de transmission (112, 212, 312, 412 ; 101, 102, 103, 104) entraînés au moyen de plusieurs chaînes d'entraînement cinématique (17, 27, 37 ; 18, 28, 38 ; 18, 48, 58) qui s'étendent le long de la machine en passant en correspondance des unités opérationnelles (1, 2, 3, 4), sont montées suivant un agencement d'embranchement à partir de l'arbre du moteur principal (14) suivant un agencement géométrique en forme d'étoile et sont pourvues d'arbres de sortie (112, 212, 312, 412) correspondants, une partie des unités opérationnelles (1, 2, 3, 4) étant directement reliée (101, 102, 103, 104, 11) aux arbres de sortie correspondants de l'unité d'entraînement, tandis qu'une partie des unités opérationnelles (5, 6, 7, 8, 9, 10) est reliée à l'unité d'entraînement grâce à un autre embranchement des chaînes cinématiques de l'unité d'entraînement, lequel embranchement traverse les unités opérationnelles (1, 2, 3, 4) reliées directement à l'unité d'entraînement (12),
**caractérisée par** la combinaison des particularités suivantes
a) entre les arbres de sortie (112, 212, 312, 412) des chaînes d'entraînement cinématique (17, 27, 37 ; 18, 28, 38; 18, 48, 58) de l'unité d'entraînement (12) et les arbres d'entrée (101, 102, 103, 104) des unités opérationnelles (1, 2, 3, 4) directement reliées à l'unité d'entraînement, il est prévu des accouplements (11) qui sont réalisés de façon à présenter au moins un degré de liberté dans le sens transversal vis-à-vis de l'axe desdits arbres et au moins un autre degré de liberté dans le sens axial desdits arbres,
b) chaque accouplement (11) comprend deux parties (111, 211) et une première partie (211) de l'accouplement, clavetée sur l'arbre d'entrée (101, 102, 103, 104) d'une unité opérationnelle (1, 2, 3, 4), est pourvue d'une cavité d'accouplement périphérique radiale (311) ouverte au moins sur le côté frontal tourné vers l'autre partie (111) de l'accouplement qui est montée de façon à tourner avec l'arbre de sortie (112, 212, 312, 412) correspondant de l'unité d'entraînement (12) et comporte une saillie d'accouplement axiale (511) coincidant avec ladite cavité d'accouplement (311) et engagée dans cette cavité sans jeu dans un sens circonférentiel, mais glissant radialement et axialement dans une mesure préfixée, la cavité d'accouplement (311) et la saillie d'accouplement (511) étant agencées dans une position excentrique via-à-vis de l'axe de rotation de l'arbre,
c) les deux parties (111, 211) de l'accouplement sont pourvues de moyens de contrepoids et/ou d'équilibre (611, 411) qui sont constitués d'une cavité d'équilibre (411) ménagée dans la première partie (111) de l'accouplement dans une position diamétralement opposée à la cavité d'accouplement (311), et d'une saillie d'équilibre frontale (611) portée par l'autre partie (211) de l'accouplement dans une position diamétralement opposée à la saillie d'accouplement (511) et engagée dans la cavité d'équilibre (411) avec un certain jeu dans le sens radial ainsi que dans le sens tangentiel.

2. Unité d'entraînement suivant la revendication 1, **caractérisée en ce que** la saillie d'accouplement axiale (511) est constituée d'un galet tournant autour d'un arbre excentrique et parallèle à l'axe de l'arbre correspondant, tandis que la saillie d'équilibre frontale (611) est fixe.

3. Unité d'entraînement suivant la revendication 1 ou 2, **caractérisée en ce que** les deux parties (111, 211) de l'accouplement comportent deux ailes radialement opposées, sur lesquelles sont prévues les saillies d'accouplement axiale et d'équilibre frontale (511, 611) et les cavités d'accouplement et d'équilibre (311, 411).

4. Unité d'entraînement suivant une ou plusieurs des revendications précédentes, **caractérisée en ce qu'**au moins l'une des cavités d'accouplement et d'équilibre (311, 411) est ouverte sur les deux côtés frontaux et sur le côté extérieur radial.
